# EUROPEAN PATENT APPLICATION

(11) **EP 4 488 410 A1**
(43) Date of publication of application: **08.01.2025**
(21) Application number: 23763633.7
(22) Date of filing: 02.02.2023
(51) Int. Cl.: C23C 28/02, C23C 28/00, C25D 7/06, C23C 2/06, C23C 2/38, C23C 18/16

(54) **STEEL WIRE AND SPRING WITH EXCELLENT ANTIBACTERIAL PROPERTIES AND CORROSION RESISTANCE AND METHOD FOR MANUFACTURING SAME**

(30) Priority: 04.03.2022 KR 20220028222
(71) Applicant: Kiswire Ltd., Suyeong-gu Busan 48212 (KR); Scherdel Innotec Forschungs- Und Entwicklungs GmbH, 95615 Marktredwitz (DE)
(72) Inventor: YU, Gwang Weon, Pohang-si, Gyeongsangbuk-do 37677 (KR); ZAUMSEIL, Wolf-Thilo, 95701 Pechbrunn (DE); GUENTHNER, Martin, 95666 Mitterteich (DE)
(74) Representative: Maiwald GmbH
(86) International application number: PCT/KR2023/001501
(87) International publication number: WO 2023/167434

(57) **Abstract**

The disclosure relates to a steel wire and a spring having excellent antibacterial properties and corrosion resistance, and methods of manufacturing the same. The steel wire having excellent antibacterial properties and corrosion resistance includes: a steel wire; and a plating layer formed on the steel wire, wherein the plating layer includes a zinc (Zn)-aluminum (Al) plating layer plated on a surface of the steel wire, and a doping layer formed by doping a surface of the Zn-AI plating layer with a metal in a colloidal form. The method of manufacturing the steel wire having excellent antibacterial properties and corrosion resistance includes forming a plating layer on a surface of a steel wire, wherein the forming of the plating layer includes forming a Zn-AI plating layer by plating the surface of the steel wire, and forming a doping layer by doping a surface of the Zn-AI plating layer with a metal in a colloidal form.

## Description

### Technical Field

The disclosure relates to a steel wire and a spring having excellent antibacterial properties and corrosion resistance, and methods of manufacturing the same, and more particularly, to a steel wire and a spring having excellent antibacterial properties and corrosion resistance by plating a zinc (Zn)-aluminum (Al) plating layer with copper in a colloidal form, and methods of manufacturing the same.

### Background Art

In the medical field, medical pen-type injectors (auto-injectors), which are medical equipment designed to inject a drug in emergency situations, are being used. The medical pen-type injectors are medical instruments that allow injection of a drug by pushing a piston inside the syringe through a spring.

In general, springs used in the medical pen-type injectors consist of stainless-steel wires. However, when the springs of the medical pen-type injectors are formed of stainless-steel wires, the following problems may occur.

Steel wires used in the medical field are used for treatment purposes, and thus should not be harmful to the human body. Also, the steel wires used in the medical field are preferably antibacterial by not being contaminated by germs.

However, there is a problem in that the springs of the medical pen-type injectors formed of stainless-steel wires not only have insufficient antibacterial properties, but also contain substances harmful to the human body such as hexavalent chrome, etc.

In addition to the medical pen-type injectors, steel wires are widely used in various industries, and the development of steel wires that are not harmful to the human body and have excellent antibacterial properties is required in various industrial fields.

### Disclosure

### Technical Problem

The disclosure is to solve the above-described problem. More particularly, the disclosure relates to a steel wire and a spring having excellent antibacterial properties and corrosion resistance by plating a zinc (Zn)-aluminum (Al) plating layer with copper in a colloidal form, and methods of manufacturing the same.

### Technical Solution

A steel wire having excellent antibacterial properties and corrosion resistance, according to an embodiment of the disclosure, includes a steel wire, and a plating layer formed on the steel wire, wherein the plating layer includes a zinc (Zn)-aluminum (Al) plating layer plated on a surface of the steel wire, and a doping layer formed by doping a surface of the Zn-AI plating layer with a metal in a colloidal form.

The doping layer of the steel wire having excellent antibacterial properties and corrosion resistance, according to an embodiment of the disclosure, may be formed by doping the surface of the Zn-AI plating layer with copper (Cu) in a colloidal form.

The plating layer of the steel wire having excellent antibacterial properties and corrosion resistance, according to an embodiment of the disclosure, may include 84.5 to 96.5 wt% of Zn, 3 to 15 wt% of Al, and 0.01 to 0.5 wt% of Cu.

The doping layer of the steel wire having excellent antibacterial properties and corrosion resistance, according to an embodiment of the disclosure, may be formed by doping the surface of the Zn-AI plating layer with silver (Ag) or titanium oxide (TiO) in a colloidal form.

The doping layer of the steel wire having excellent antibacterial properties and corrosion resistance, according to an embodiment of the disclosure, may be doped along a plating particle interface formed on the Zn-AI plating layer.

The doping layer of the steel wire having excellent antibacterial properties and corrosion resistance, according to an embodiment of the disclosure, may be doped on the surface of the Zn-AI plating layer by using an electroless plating method.

The steel wire having the plating layer, of the steel wire having excellent antibacterial properties and corrosion resistance, according to an embodiment of the disclosure, may be drawn and processed at a cross-sectional reduction ratio of about 60 % to about 99 %.

The steel wire having excellent antibacterial properties and corrosion resistance, according to an embodiment of the disclosure, may be drawn and processed after the Zn-Al plating layer and the doping layer are doped, or the doping layer may be doped after the Zn-AI plating layer is plated, and drawn and processed.

A spring having excellent antibacterial properties and corrosion resistance, according to an embodiment of the disclosure, includes a steel wire, and a plating layer formed on the steel wire, wherein the plating layer includes a zinc (Zn)-aluminum (Al) plating layer plated on a surface of the steel wire, and a doping layer formed by doping a surface of the Zn-AI plating layer with a metal in a colloidal form, wherein the steel wire is processed and manufactured in the form of a spring.

A method of manufacturing a steel wire having excellent antibacterial properties and corrosion resistance, according to an embodiment of the disclosure, includes forming a plating layer on a surface of a steel wire, wherein the forming of the plating layer includes forming a zinc (Zn)-aluminum (Al) plating layer by plating the surface of the steel wire, and forming a doping layer by doping a surface of the Zn-Al plating layer with a metal in a colloidal form.

In the forming of the doping layer, of the method of manufacturing the steel wire having excellent antibacterial properties and corrosion resistance, according to an embodiment of the disclosure, the surface of the Zn-AI plating layer may be doped with copper (Cu) in a colloidal form.

The plating layer of the method of manufacturing the steel wire having excellent antibacterial properties and corrosion resistance, according to an embodiment of the disclosure, may include 84.5 to 96.5 wt% of Zn, 3 to 15 wt% of Al, and 0.01 to 0.5 wt% of Cu.

In the forming of the doping layer, of the method of manufacturing the steel wire having excellent antibacterial properties and corrosion resistance, according to an embodiment of the disclosure, the doping layer may be formed by doping the surface of the Zn-AI plating layer with silver (Ag) or titanium oxide (TiO) in a colloidal form.

In the forming of the doping layer, of the method of manufacturing the steel wire having excellent antibacterial properties and corrosion resistance, according to an embodiment of the disclosure, the doping layer may be doped along a plating particle interface formed on the Zn-AI plating layer by using an electroless plating method.

The method of manufacturing the steel wire having excellent antibacterial properties and corrosion resistance, according to an embodiment of the disclosure, may further include, after the plating layer is formed on the steel wire through the forming of the doping layer, drawing the steel wire having the plating layer, wherein the steel wire having the plating layer may be drawn and processed at a cross-sectional reduction ratio of about 60 % to about 99 %, in the drawing of the steel wire.

In the drawing of the steel wire, of the method of manufacturing the steel wire having excellent antibacterial properties and corrosion resistance, according to an embodiment of the disclosure, after the doping layer is formed on the steel wire through the forming of the doping layer, the steel wire may be drawn and processed, or after the Zn-AI plating layer is formed on the steel wire through the forming of the Zn-Al plating layer, the steel wire may be drawn and processed, and the doping layer may be formed through the forming of the doping layer.

A method of manufacturing a spring having excellent antibacterial properties and corrosion resistance, according to an embodiment of the disclosure, includes forming a plating layer on a surface of a steel wire, wherein the forming of the plating layer includes forming a zinc (Zn)-aluminum (Al) plating layer by plating the surface of the steel wire, and forming a doping layer by doping a surface of the Zn-AI plating layer with a metal in a colloidal form, the method further including manufacturing the steel wire having the plating layer in the form of a spring.

### Advantageous Effects

The disclosure relates to a steel wire and a spring having excellent antibacterial properties and corrosion resistance, and methods of manufacturing the same, and may provide a steel wire having excellent antibacterial properties and high corrosion resistance by plating a Zn-Al plating layer with copper in a colloidal form.

Also, the disclosure may provide a special plated steel wire formed of a high-carbon steel material having high price competitiveness due to its low manufacturing cost compared to stainless steel.

In addition, the disclosure may enable manufacture of a spring having excellent performance and higher strength than stainless steel by manufacturing a spring with a steel wire having excellent antibacterial properties and corrosion resistance.

### Description of Drawings

FIG. 1 is a diagram of a steel wire plated with a plating layer including a zinc (Zn)-aluminum (Al) plating layer and a doping layer, according to an embodiment of the disclosure.
FIG. 2(a) and FIG. 2(b) are diagrams of a doping layer doped on a plating particle interface of a Zn-AI plating layer, according to an embodiment of the disclosure.
FIG. 3 is a diagram of a spring formed of a steel wire and an injector on which the spring may be mounted, according to an embodiment of the disclosure.
FIG. 4(a) and FIG. 4(b) are process diagrams of a method of manufacturing a steel wire having excellent antibacterial properties and corrosion resistance, according to an embodiment of the disclosure.
FIG. 5 is an analysis photograph of a time-of-flight secondary ion mass spectrometry (TOF-SIMS) when a steel wire having a plating layer is drawn, illustrating that copper (Cu) is evenly dispersed on a Zn-AI plating layer, according to an embodiment of the disclosure.

### Mode for Invention

The principles and embodiments of the disclosure will be described herein in order to clarify the scope of the disclosure and to enable those of ordinary skill in the art to embody and practice the disclosure. The presented embodiments may be implemented in various forms.

It will be understood that the terms "including," "having," and "comprising" used in various embodiments of the disclosure are intended to indicate the existence of the features, operations, or elements described in the disclosure, and are not intended to limit the existence of additional one or more features, operations, or elements. Also, it will be understood that the terms "including," "having," and "comprising" in various embodiments of the disclosure are intended to indicate the existence of features, numbers, steps, operations, elements, and parts, described in the specification, or combinations thereof, and are not intended to preclude the possibility that one or more other features, numbers, steps, operations, elements, and parts, or combinations thereof may exist or may be added.

It will be understood that, when an element is referred to as being "connected" or "coupled" to another element, it can be directly connected or coupled to the other element, or can be connected or coupled to the other element with intervening elements interposed therebetween. In contrast, it will be understood that, when an element is referred to as being "directly connected" or "directly coupled" to another element, there are no intervening elements interposed between the element and the other element.

It will be understood that although the terms "first", "second", etc. may be used herein to describe various elements, these elements should not be limited by these terms. These terms are used only to distinguish one element from another.

The disclosure relates to a steel wire and a spring having excellent antibacterial properties and corrosion resistance, and methods of manufacturing the same, and more particularly, to a steel wire and a spring having excellent antibacterial properties and corrosion resistance by plating a zinc (Zn)-aluminum (Al) plating layer with copper in a colloidal form, and methods of manufacturing the same.

The steel wire having excellent antibacterial properties and corrosion resistance, according to an embodiment of the disclosure, may be used for a spring of a medical pen-type injector. However, embodiments are not limited thereto, and the steel wire having excellent antibacterial properties and corrosion resistance, according to an embodiment of the disclosure, may also be used in various fields requiring antibacterial properties without being harmful to the human body. Hereinafter, preferred embodiments of the disclosure will be described in detail with reference to the accompanying drawings.

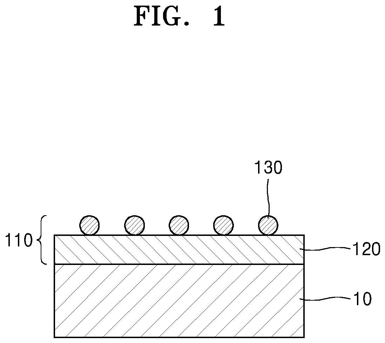

Referring to FIG. 1, a steel wire having excellent antibacterial properties and corrosion resistance, according to an embodiment of the disclosure, includes a steel wire 10 and a plating layer 110.

The steel wire 10 may have a wire shape and may be a high-carbon steel wire containing iron. The steel wire 10 may include about 0.35 wt% to about 1.00 wt% of carbon (C), about 0.1 wt% to about 0.3 wt% of silicon (Si), about 0.3 wt% to about 1.2 wt% of manganese (Mn), about 0.001 wt% to about 0.035 wt% of phosphorus (P), about 0.001 wt% to about 0.035 wt% of sulfur (S), about 0.001 wt% to about 0.30 wt% of copper (Cu), and the remainder of iron (Fe) and inevitable impurities.

The plating layer 110 may be formed on the steel wire 10, and may be formed by plating a surface of the steel wire 10.

The plating layer 110 may include a zinc (Zn)-aluminum (Al) plating layer 120 and a doping layer 130. The Zn-AI plating layer 120 may be a Zn-AI alloy plating layer, and may be plated on the surface of the steel wire 10.

The Zn-AI plating layer 120 may be formed by plating the surface of the steel wire 10 with a Zn-AI alloy by using various plating methods such as hot dip plating, electroplating, and the like.

The Zn-AI plating layer 120 may prevent corrosion of the steel wire 10 containing Fe by using high reactive Zn-based plating. In detail, as the Zn-based plating of the Zn-AI plating layer 120 is exposed to the outside and functions as a sacrificial anode, the Zn-based plating corrodes instead of a Fe base material of the steel wire 10, and thus, a Fe base layer of the steel wire 10 may be protected.

The doping layer 130 is formed by doping a surface of the Zn-AI plating layer 120 with a metal in a colloidal form. According to an embodiment of the disclosure, the doping layer 130 may be formed by doping the surface of the Zn-AI plating layer 120 with Cu in a colloidal form.

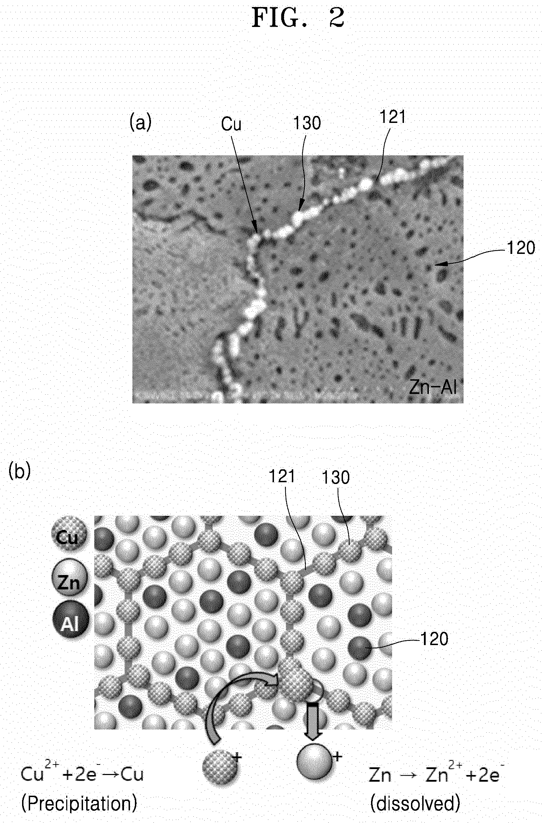

In this case, the doping with Cu in the colloidal form means that, as shown in FIGS. 1, 2(a), and 2(b) Cu is doped on the surface of the Zn-AI plating layer 120 in a form of particles rather than covering the entire surface of the Zn-AI plating layer 120.

As described above, the Zn-based plating of the Zn-AI plating layer 120 is required to be exposed to the outside so that the Zn-AI plating layer 120 may be able to function as the sacrificial anode. When Cu is doped to cover the entire surface of the Zn-AI plating layer 120, an area of the Zn-Al plating layer 120 being exposed is reduced even though a thickness of the plating is small, and thus, a small anode-to-large cathode corrosion phenomenon occurs in which the Zn-AI plating layer 120 may not be able to function as the sacrificial anode. Accordingly, there is a risk that the steel wire 10 rapidly corrodes.

In order to prevent rapid corrosion as described above, the doping layer 130 may be formed by doping the surface of the Zn-AI plating layer 120 with a metal in a colloidal form. In detail, by doping the surface of the Zn-AI plating layer 120 with Cu in a form of colloidal particles, the Zn-AI plating layer 120 may be exposed to the outside and may be able to function as the sacrificial anode.

Even with a small amount of the doping layer 130 containing Cu, antibacterial properties may be secured with Cu. Therefore, when Cu is doped in a form of colloidal particles on the surface of the Zn-AI plating layer 120, the Zn-AI plating layer 120 functions as the sacrificial anode so that antibacterial properties may be enhanced due to the doping layer 130 containing Cu.

Referring to FIGS. 2(a) and 2(b), the doping layer 130 may be doped along a plating particle interface 121 formed on the Zn-AI plating layer 120. The Zn-Al plating layer 120 may be formed by plating the steel wire 10 with a Zn-AI alloy. In this case, fine gaps having a honeycomb structure may be formed on the surface of the Zn-AI plating layer 120.

The fine gaps having a honeycomb structure are difficult to observe with the naked eye and are small enough to be seen only with a microscope. The plating particle interface 121 formed on the Zn-AI plating layer 120 may include the fine gaps having a honeycomb structure, and the doping layer 130 may be formed along the plating particle interface 121.

In slightly more detail, a Zn-AI plating grain boundary (the plating particle interface 121) is a boundary where Zn-AI plating crystals are generated and meet each other, and has high energy so that precipitated Cu particles (the doping layer 130) concentrate on the Zn-AI plating grain boundary (the plating particle interface 121).

The doping layer 130 containing Cu may be doped on the surface of the Zn-AI plating layer 120 by using a method such as pulse plating, electroless plating, sputtering, spraying, and the like.

In order to dope the doping layer 130 along the plating particle interface 121 formed on the Zn-AI plating layer 120, it is preferable that the doping layer 130 is doped on the surface of the Zn-AI plating layer 120 by using an electroless plating method.

The electroless plating method is a method in which metal ions in an aqueous metal salt solution are self-catalytically reduced by a force of a reducing agent to precipitate a metal on a surface of an object to be treated without being supplied with electrical energy from the outside.

When the doping layer 130 is doped on the surface of the Zn-AI plating layer 120 by using an electrolytic plating method in which a thin film of another metal is coated on a surface of a metal by using the principle of electrolysis, there is a risk that the doping layer 130 is doped on the entire surface of the Zn-AI plating layer 120.

When the doping layer 130 is doped on the entire surface of the Zn-AI plating layer 120, an area of the Zn-AI plating layer 120 being exposed is reduced, and thus, the Zn-AI plating layer 120 may not be able to function as the sacrificial anode.

Therefore, in order to dope the doping layer 130 along the plating particle interface 121 formed on the Zn-AI plating layer 120, it is preferable that the doping layer 130 is doped on the surface of the Zn-Al plating layer 120 by using the electroless plating method.

In detail, the doping layer 130 may be doped by using a galvanic cell method based on a potential difference between Cu and Zn-AI. Zn particles of the Zn-AI plating layer 120 lose electrons and are oxidized (dissolved, Zn -> Zn²⁺ + 2e⁻), and Cu cations receive the electrons and are precipitated (Cu²⁺ + 2e⁻ -> Cu) on the doping particle interface so that the doping layer 130 containing Cu may be formed. Such Zn oxidation and Cu precipitation mainly occur at a Zn-AI plating interface.

When the plating layer 110 including the Zn-AI plating layer 120 and the doping layer 130 is formed on the steel wire 10, the steel wire 10 may be drawn and processed. When the steel wire 10 having the plating layer 110 including the Zn-AI plating layer 120 and the doping layer 130 is drawn and processed, the doping layer 130 may be evenly dispersed and attached.

In detail, because the doping layer 130 is doped on the Zn-Al plating layer 120 as Cu is precipitated, the doping layer 130 may have a weak adhesive force. When the steel wire 10 having the plating layer 110 is drawn and processed, the adhesive force of the doping layer 130 is enhanced so that the doping layer 130 may be attached to the Zn-AI plating layer 120.

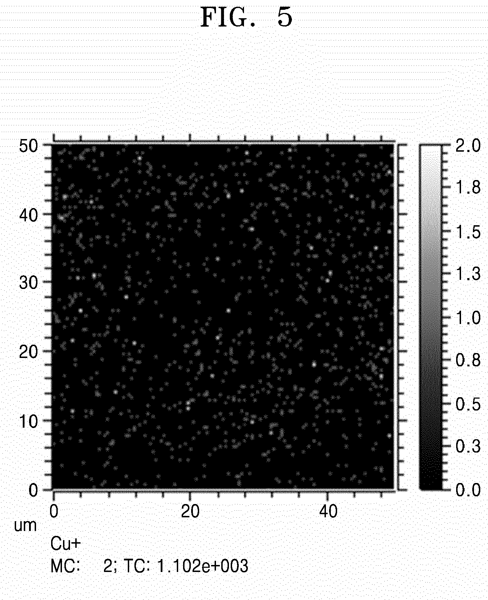

At the same time, the doping layer 130 is evenly dispersed on the surface of the Zn-AI plating layer 120 so that antibacterial properties may be enhanced. FIG. 5 is an analysis photograph of a time-of-flight secondary ion mass spectrometry (TOF-SIMS) when a steel wire 10 having a plating layer 110 is drawn. (FIG. 5 illustrates that Cu is evenly dispersed on a surface of a Zn-AI plating layer, and different colors are illustrated according to the concentration of Cu.)

As shown in FIG. 5, when the steel wire 10 having the plating layer 110 is drawn, Cu may be evenly dispersed on the surface of the Zn-AI plating layer 120, thereby enhancing the antibacterial properties.

The steel wire 10 having the plating layer 110 may be drawn and processed at a cross-sectional reduction ratio of about 60 % to about 99 %.

According to an embodiment of the disclosure, after the Zn-Al plating layer 120 and the doping layer 130 are plated, the steel wire 10 may be drawn and processed. According to another embodiment of the disclosure, after the Zn-AI plating layer 120 is plated and the steel wire 10 is drawn and processed, the doping layer 130 may be doped.

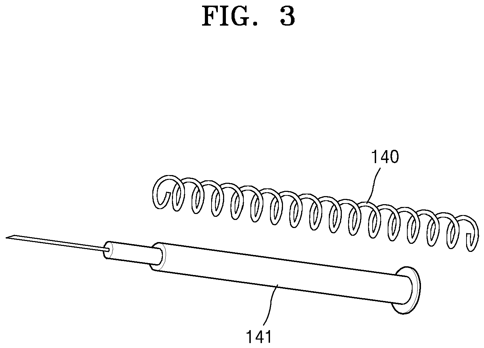

Referring to FIG. 3, the steel wire having excellent antibacterial properties and corrosion resistance, according to an embodiment of the disclosure, may be formed as the spring 140. The spring 140 may be used in a medical pen-type injector 141 (auto-injector).

As the spring 140 is manufactured with the steel wire 10 having the plating layer 110 including the Zn-AI plating layer 120 and the doping layer 130, the spring 140 having excellent antibacterial properties and corrosion resistance may be manufactured.

In detail, the antibacterial properties may be enhanced by the doping layer 130 containing Cu, and the corrosion resistance may be enhanced by preventing corrosion of the steel wire 10 through the Zn-AI plating layer 120.

Because the doping layer 130 is doped in a form of colloidal particles on the surface of the Zn-AI plating layer 120, the corrosion resistance of the Zn-Al plating layer 120 may not deteriorate, and at the same time, the antibacterial properties of the Zn-AI plating layer 120 may be enhanced due to Cu.

The plating layer 110 including the Zn-AI plating layer 120 and the doping layer 130, according to an embodiment of the disclosure, may include about 84.5 wt% to about 96.5 wt% of Zn, about 3 wt% to about 15 wt% of Al, and about 0.01 wt% to about 0.5 wt% of Cu.

Because even a small amount of Cu included in the doping layer 130 may enhance the antibacterial properties, it is preferable that the doping layer 130 includes about 0.01 wt% to about 0.5 wt% of Cu.

It has been described above that the doping layer 130 is formed of Cu, but embodiments are not limited thereto. The doping layer 130 may include various materials when a material capable of enhancing the antibacterial properties may be doped in a colloidal form on the Zn-AI plating layer 120.

According to another embodiment of the disclosure, the doping layer 130 may be formed by doping the surface of the Zn-AI plating layer 120 with silver (Ag) or titanium oxide (TiO) in a colloidal form.

The spring having excellent antibacterial properties and corrosion resistance, according to an embodiment of the disclosure, is manufactured by processing the steel wire 10 having the plating layer 110 in the form of a spring. The characteristics of the steel wire 10 and the plating layer 110 used in the spring 140 are the same as those described above, and thus, a detailed description thereof will be omitted.

As the spring 140 is manufactured with the steel wire 10 having the plating layer 110 including the Zn-AI plating layer 120 and the doping layer 130, the spring 140 having excellent antibacterial properties and corrosion resistance may be manufactured.

Also, as the spring 140 is manufactured with the steel wire 10 having the plating layer 110 including the Zn-AI plating layer 120 and the doping layer 130, the spring 140 having excellent performance and higher strength than stainless steel may be manufactured.

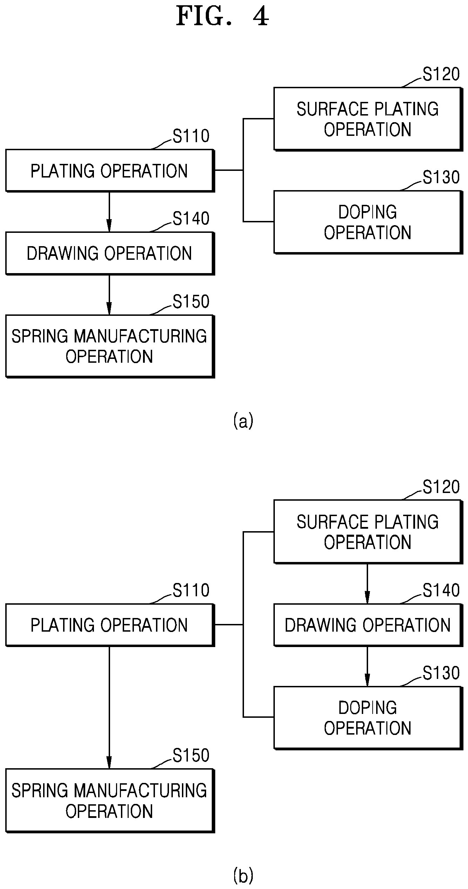

The above-described steel wire having excellent antibacterial properties and corrosion resistance, according to the embodiment of the disclosure, may be manufactured by using the following method. Referring to FIG. 4(a), a method of manufacturing a steel wire having excellent antibacterial properties and corrosion resistance, according to an embodiment of the disclosure, includes a plating operation (S110) for forming a plating layer 110 on a surface of the steel wire 10.

The plating operation (S110) includes a surface plating operation (S120) for forming a Zn-AI plating layer 120 by plating the surface of the steel wire 10, and a doping operation (S130) for forming a doping layer 130 by doping a surface of the Zn-AI plating layer 120 with a metal in a colloidal form.

The steel wire 10 may have a wire shape and may be a high-carbon steel wire containing Fe. The steel wire 10 may include about 0.35 wt% to about 1.00 wt% of C, about 0.1 wt% to about 0.3 wt% of Si, about 0.3 wt% to about 1.2 wt% of Mn, about 0.001 wt% to about 0.035 wt% of P, about 0.001 wt% to about 0.035 wt% of S, about 0.001 wt% to about 0.30 wt% of Cu, and the remainder of Fe and inevitable impurities.

In the surface plating operation (S120), the Zn-AI plating layer 120 is formed on the surface of the steel wire 10. The Zn-AI plating layer 120 may be formed by plating the surface of the steel wire 10 with a Zn-AI alloy by using various plating methods such as hot dip plating, electroplating, etc.

The Zn-AI plating layer 120 may prevent corrosion of the steel wire 10 containing Fe by using high reactive Zn-based plating. In detail, as the Zn-based plating of the Zn-AI plating layer 120 is exposed to the outside and functions as a sacrificial anode, the Zn-based plating corrodes instead of a Fe base material of the steel wire 10, and thus, a Fe base layer of the steel wire 10 may be protected.

In the doping operation (S130), the doping layer 130 is formed by doping the surface of the Zn-AI plating layer 120 with a metal in a colloidal form. The doping layer 130 may be formed by doping the surface of the Zn-AI plating layer 120 with the metal in the colloidal form.

In the doping operation (S130) according to an embodiment of the disclosure, the doping layer 130 may be formed by doping the surface of the Zn-AI plating layer 120 with Cu in a colloidal form.

In this case, the doping with Cu in the colloidal form means that, as shown in FIGS. 1, 2(a), and 2(b), Cu is doped on the surface of the Zn-AI plating layer 120 in a form of particles rather than covering the entire surface of the Zn-AI plating layer 120.

As described above, the Zn-based plating of the Zn-AI plating layer 120 is required to be exposed to the outside so that the Zn-AI plating layer 120 may be able to function as the sacrificial anode. When Cu is doped to cover the entire surface of the Zn-AI plating layer 120, an area of the Zn-AI plating layer 120 being exposed is reduced even though a thickness of the plating is small, and thus, a small anode-to-large cathode corrosion phenomenon occurs in which the Zn-AI plating layer 120 may not be able to function as the sacrificial anode. Accordingly, there is a risk that the steel wire 10 rapidly corrodes.

In order to prevent this, in the doping operation (S130), the doping layer 130 may be formed by doping the surface of the Zn-AI plating layer 120 with a metal in a colloidal form.

Referring to FIGS. 2(a) and 2(b), in the doping operation (S130), the doping layer 130 may be doped along the plating particle interface 121 formed on the Zn-Al plating layer 120, by using an electroless plating method. The Zn-AI plating layer 120 may be formed by plating the steel wire 10 with a Zn-AI alloy. In this case, fine gaps having a honeycomb structure may be formed on the surface of the Zn-Al plating layer 120.

The fine gaps having a honeycomb structure are difficult to observe with the naked eye and may be only observed with a microscope. The plating particle interface 121 formed on the Zn-AI plating layer 120 may include the fine gap having a honeycomb structure, and the doping layer 130 may be doped along the plating particle interface 121.

In slightly more detail, a Zn-AI plating grain boundary (the plating particle interface 121) is a boundary where Zn-AI plating crystals are generated and meet each other, and has high energy so that precipitated Cu particles (the doping layer 130) concentrate on the Zn-AI plating grain boundary (the plating particle interface 121).

The doping layer 130 containing Cu may be doped on the surface of the Zn-AI plating layer 120 by using a method such as pulse plating, electroless plating, sputtering, spraying, and the like.

However, in the doping operation (S130), in order to dope the doping layer 130 along the plating particle interface 121 formed on the Zn-AI plating layer 120, it is preferable to use an electroless plating method.

The electroless plating method is a method in which metal ions in an aqueous metal salt solution are self-catalytically reduced by a force of a reducing agent to precipitate a metal on a surface of an object to be treated without being supplied with electrical energy from the outside.

When the doping layer 130 is doped on the surface of the Zn-AI plating layer 120 by using an electrolytic plating method in which a thin film of another metal is coated on a surface of a metal by using the principle of electrolysis, there is a risk that the doping layer 130 is doped on the entire surface of the Zn-AI plating layer 120.

When the doping layer 130 is doped on the entire surface of the Zn-AI plating layer 120, an area of the Zn-AI plating layer 120 being exposed is reduced, and thus, the Zn-AI plating layer 120 may not be able to function as the sacrificial anode.

Therefore, in order to dope the doping layer 130 along the plating particle interface 121 formed on the Zn-AI plating layer 120, it is preferable that the doping layer 130 is doped on the surface of the Zn-Al plating layer 120 by using the electroless plating method.

In detail, the doping layer 130 may be doped by using a galvanic cell method based on a potential difference between Cu and Zn-AI. Zn particles of the Zn-AI plating layer 120 lose electrons and are oxidized (dissolved, Zn -> Zn²⁺ + 2e⁻), and Cu cations receive the electrons and are precipitated (Cu²⁺ + 2e⁻ -> Cu) on the plating particle interface so that the doping layer 130 containing Cu may be formed. Such Zn oxidation and Cu precipitation mainly occur at a Zn-AI plating interface.

The method of manufacturing the steel wire having excellent antibacterial properties and corrosion resistance, according to an embodiment of the disclosure, may further include a drawing operation (S140) and a spring manufacturing operation (S150).

In the drawing operation (S140), after the plating layer 110 is formed on the steel wire 10 through the doping operation (S130), the steel wire 10 having the plating layer 110 is drawn and processed.

When the plating layer 110 including the Zn-AI plating layer 120 and the doping layer 130 is formed on the steel wire 10, the steel wire 10 may be drawn and processed through the drawing operation (S140). When the steel wire 10 having the plating layer 110 including the Zn-AI plating layer 120 and the doping layer 130 is drawn and processed, the doping layer 130 may be evenly dispersed and attached.

In detail, because the doping layer 130 is doped on the Zn-AI plating layer 120 as Cu is precipitated, the doping layer 130 may have a weak adhesive force. When the steel wire 10 having the plating layer 110 is drawn and processed, the adhesive force of the doping layer 130 is enhanced so that the doping layer 130 may be attached to the Zn-AI plating layer 120.

At the same time, the doping layer 130 is evenly dispersed on the surface of the Zn-AI plating layer 120 so that antibacterial properties may be enhanced. FIG. 5 is an analysis photograph of a time-of-flight secondary ion mass spectrometry (TOF-SIMS) when a steel wire 10 having a plating layer 110 is drawn. (FIG. 5 illustrates that Cu is evenly dispersed on a surface of a Zn-AI plating layer, and different colors are illustrated according to the concentration of Cu.)

As shown in FIG. 5, when the steel wire 10 having the plating layer 110 is drawn, Cu may be evenly dispersed on the surface of the Zn-AI plating layer 120, thereby enhancing the antibacterial properties.

The steel wire 10 having the plating layer 110 may be drawn and processed at a cross-sectional reduction ratio of about 60 % to about 99 %, in the drawing operation (S140).

According to an embodiment of the disclosure, in the drawing operation (S140), as shown in FIG. 4(a), after the doping layer 130 is formed on the steel wire 10 through the doping operation (S130), the steel wire 10 may be drawn and processed. According to another embodiment of the disclosure, as shown in FIG. 4(b), after the Zn-AI plating layer 120 is formed on the steel wire 10 through the surface plating operation 120, the steel wire 10 may be drawn and processed, and the doping layer 130 may be formed through the doping operation (S130).

In the spring manufacturing operation (S150), the steel wire drawn and processed in the drawing operation (S140) is manufactured in the form of a spring. Referring to FIG. 3, the steel wire drawn and processed in the drawing operation (S140) may be formed as the spring 140. The spring 140 may be used in a medical pen-type injector 141 (auto-injector).

As the spring 140 is manufactured with the steel wire 10 having the plating layer 110 including the Zn-AI plating layer 120 and the doping layer 130, the spring 140 having excellent antibacterial properties and corrosion resistance may be manufactured.

In detail, the antibacterial properties may be enhanced by the doping layer 130 containing Cu, and the corrosion resistance may be enhanced by preventing corrosion of the steel wire 10 through the Zn-AI plating layer 120.

Because the doping layer 130 is doped in a form of colloidal particles on the surface of the Zn-AI plating layer 120, the corrosion resistance of the Zn-Al plating layer 120 may not deteriorate, and at the same time, the antibacterial properties of the Zn-AI plating layer 120 may be enhanced due to Cu.

The plating layer 110 including the Zn-AI plating layer 120 and the doping layer 130, according to an embodiment of the disclosure, may include about 84.5 wt% to about 96.5 wt% of Zn, about 3 wt% to about 15 wt% of Al, and about 0.01 wt% to about 0.5 wt% of Cu.

Because even a small amount of Cu included in the doping layer 130 may enhance the antibacterial properties, it is preferable that the doping layer 130 includes about 0.01 wt% to about 0.5 wt% of Cu.

It has been described above that the doping layer 130 is formed of Cu, but embodiments are not limited thereto. The doping layer 130 may include various materials when a material capable of enhancing the antibacterial properties may be doped in a colloidal form on the Zn-AI plating layer 120.

In the doping operation (S120) according to another embodiment of the disclosure, the doping layer 130 may be formed by plating the surface of the Zn-AI plating layer 120 with Ag or TiO in a colloidal form.

A method of manufacturing a spring having excellent antibacterial properties and corrosion resistance, according to an embodiment of the disclosure, includes a plating operation (S110) and a spring manufacturing operation (S150).

The plating operation (S110) includes a surface plating operation (S120) for forming the Zn-AI plating layer 120 by plating the surface of the steel wire 10, and a doping operation (S130) for forming the doping layer 130 by doping the surface of the Zn-AI plating layer 120 with a metal in a colloidal form.

In the method of manufacturing the spring having excellent antibacterial properties and corrosion resistance, according to an embodiment of the disclosure, the steel wire 10 having the plating layer 110 is processed and manufactured in the form of a spring.

The characteristics of the steel wire 10 and the plating layer 110 used in the spring 140 are the same as those described above, and thus, a detailed description thereof will be omitted. Also, the characteristics of the surface plating operation (S120) for forming a plating layer on the steel wire 10, the doping operation (S130), and the drawing operation (S140) for drawing the steel wire 10 having the plating layer 110 are the same as the above-described method of manufacturing the steel wire having excellent antibacterial properties and corrosion resistance, according to the embodiment of the disclosure. Thus, a detailed description thereof will be omitted.

The spring manufacturing operation (S150), in which the steel wire 10 having the plating layer 110 is manufactured in the form of a spring, is the same as an operation for manufacturing the steel wire having excellent antibacterial properties and corrosion resistance, according to an embodiment of the disclosure. The spring manufacturing operation (S150) has been described above in detail, and thus, a detailed description thereof will be omitted.

As the spring 140 is manufactured with the steel wire 10 having the plating layer 110 including the Zn-AI plating layer 120 and the doping layer 130, the spring 140 having excellent antibacterial properties and corrosion resistance may be manufactured.

Also, as the spring 140 is manufactured with the steel wire 10 having the plating layer 110 including the Zn-AI plating layer 120 and the doping layer 130, the spring 140 having excellent performance and higher strength than stainless steel may be manufactured.

The above-described steel wire and the spring having excellent antibacterial properties and corrosion resistance and methods of manufacturing the same, according to the embodiments of the disclosure, have the following effects.

The steel wire having excellent antibacterial properties and corrosion resistance and the method of manufacturing the same, according to the embodiments of the disclosure, may provide a steel wire having excellent antibacterial properties and high corrosion resistance by plating a Zn-AI plating layer with copper in a colloidal form.

In detail, the steel wire having excellent antibacterial properties and corrosion resistance and the method of manufacturing the same, according to the embodiments of the disclosure, may enhance the antibacterial properties through a doping layer containing Cu and enhance the corrosion resistance by preventing corrosion of the steel wire through the Zn-AL plating layer.

In particular, the steel wire having excellent antibacterial properties and corrosion resistance and the method of manufacturing the same, according to the embodiments of the disclosure, may not deteriorate the corrosion resistance of the Zn-AI plating layer due to the doping layer being doped on a surface of the Zn-AI plating layer in a colloidal form, and may also enhance the antibacterial properties due to Cu.

In addition, the steel wire having excellent antibacterial properties and corrosion resistance and the method of manufacturing the same, according to the embodiments of the disclosure, may provide a special plated steel wire formed of a high-carbon steel material having high price competitiveness due to its low manufacturing cost compared to stainless steel.

Also, in the spring having excellent antibacterial properties and corrosion resistance and the method of manufacturing the same, according to the embodiments of the disclosure, a spring is manufactured with a steel wire having excellent antibacterial properties and corrosion resistance, and thus a spring having excellent performance and higher strength than stainless steel may be manufactured.

It should be understood that the embodiments described herein should be considered in a descriptive sense only and not for purposes of limitation. Descriptions of features or aspects within each of the embodiments should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. A steel wire having excellent antibacterial properties and corrosion resistance, on which a plating layer is formed, the steel wire comprising:
a steel wire; and
a plating layer formed on the steel wire,
wherein the plating layer includes
a zinc (Zn)-aluminum (Al) plating layer plated on a surface of the steel wire, and
a doping layer formed by doping a surface of the Zn-AI plating layer with a metal in a colloidal form.

2. The steel wire of claim 1, wherein the doping layer is formed by doping the surface of the Zn-AI plating layer with copper (Cu) in a colloidal form.

3. The steel wire of claim 2, wherein the plating layer includes about 84.5 wt% to about 96.5 wt% of Zn, about 3 wt% to about 15 wt% of Al, and about 0.01 wt% to about 0.5 wt% of Cu.

4. The steel wire of claim 1, wherein the doping layer is formed by doping the surface of the Zn-AI plating layer with silver (Ag) or titanium oxide (TiO) in a colloidal form.

5. The steel wire of claim 1, wherein the doping layer is doped along a plating particle interface formed on the Zn-AI plating layer.

6. The steel wire of claim 1, wherein the doping layer is doped on the surface of the Zn-AI plating layer by using an electroless plating method.

7. The steel wire of claim 1, wherein the steel wire having the plating layer is drawn and processed at a cross-sectional reduction ratio of about 60 % to about 99 %.

8. The steel wire of claim 7, wherein, after the Zn-AI plating and the doping layer are plated, the steel wire is drawn and processed, or after the Zn-AI plating layer is plated, and drawn and processed, the doping layer is doped.

9. A spring having excellent antibacterial properties and corrosion resistance, which is manufactured with a steel wire having a plating layer, the spring comprising:
a steel wire; and
a plating layer formed on the steel wire,
wherein the plating layer includes
a zinc (Zn)-aluminum (Al) plating layer plated on a surface of the steel wire, and
a doping layer formed by doping a surface of the Zn-AI plating layer with a metal in a colloidal form,
wherein the steel wire is processed and manufactured in the form of a spring.

10. A method of manufacturing a steel wire having excellent antibacterial properties and corrosion resistance, which is a method of manufacturing a steel wire having a plating layer, the method comprising
forming a plating layer on a surface of a steel wire,
wherein the forming of the plating layer includes:
forming a zinc (Zn)-aluminum (Al) plating layer by plating the surface of the steel wire; and
forming a doping layer by doping a surface of the Zn-AI plating layer with a metal in a colloidal form.

11. The method of claim 10, wherein, in the forming of the doping layer, the surface of the Zn-AI plating layer is doped with copper (Cu) in a colloidal form.

12. The method of claim 11, wherein the plating layer includes about 84.5 wt% to about 96.5 wt% of Zn, about 3 wt% to about 15 wt% of Al, and about 0.01 wt% to about 0.5 wt% of Cu.

13. The method of claim 10, wherein, in the forming of the doping layer, the doping layer is formed by doping the surface of the Zn-AI plating layer with silver (Ag) or titanium oxide (TiO) in a colloidal form.

14. The method of claim 10, wherein, in the forming of the doping layer, the doping layer is doped along a plating particle interface formed on the Zn-AI plating layer by using an electroless plating method.

15. The method of claim 10, further comprising,
after the plating layer is formed on the steel wire through the forming of the doping layer, drawing the steel wire having the plating layer,
wherein the steel wire having the plating layer is drawn and processed at a cross-sectional reduction ratio of about 60 % to about 99 %, in the drawing of the steel wire.

16. The method of claim 14, wherein, in the drawing of the steel wire, after the doping layer is formed on the steel wire through the forming of the doping layer, the steel wire is drawn and processed, or after the Zn-AI plating layer is formed on the steel wire through the forming of the Zn-Al plating layer, the steel wire is drawn and processed, and the doping layer is formed through the forming of the doping layer.

17. A method of manufacturing a spring having excellent antibacterial properties and corrosion resistance, which is a method of manufacturing a spring by using a steel wire having a plating layer, the method comprising
forming a plating layer on a surface of a steel wire,
wherein the forming of the plating layer includes:
forming a zinc (Zn)-aluminum (Al) plating layer by plating the surface of the steel wire; and
forming a doping layer by doping a surface of the Zn-AI plating layer with a metal in a colloidal form,
the method further comprising manufacturing the steel wire having the plating layer in the form of a spring.
